# EUROPÄISCHE PATENTANMELDUNG

(11) **EP 3 816 352 A1**
(43) Veröffentlichungstag der Anmeldung: **05.05.2021**
(21) Anmeldenummer: 19206117.4
(22) Anmeldetag: 30.10.2019
(51) Int. Cl.: E03B 9/02, F16K 31/44, F16K 37/00

(54) **VORRICHTUNG UND VERFAHREN ZUM BETÄTIGEN EINER ARMATUR**

(71) Anmelder: Hawle Service GmbH, 2544 Leobersdorf (AT)
(72) Erfinder: Venhoda, Thomas, 2544 Leobersdorf (AT); Schneider, Arthur, 2544 Leobersdorf (AT)
(74) Vertreter: Maier, Martin

(57) **Zusammenfassung**

Vorrichtung (100) zum Betätigen einer Armatur (200), aufweisend:
- eine erste Schnittstelle (10);
- eine zweite Schnittstelle (20);
- eine Authentifizierungseinrichtung (30) zum Authentifizieren der Armatur (200) über die erste Schnittstelle (10) ;
- wenigstens ein Sensorelement (50) zum Erfassen von Betätigungsdaten der Vorrichtung (100); und
- eine Kommunikationseinrichtung (60) zum Übermitteln der Betätigungsdaten über die zweite Schnittstelle (20).

## Beschreibung

Die Erfindung betrifft eine Vorrichtung zum Betätigen einer Armatur. Die Erfindung betrifft ferner ein Verfahren zum Betätigen einer Armatur. Die Erfindung betrifft ferner ein Computerprogramm. Die Erfindung betrifft ferner ein maschinenlesbares Speichermedium.

EP 0 620 327 B1 offenbart ein Ventilsystem für ein Fluidverteilungssystem mit einem Ventil, welches mit einem Ventilschlüssel geöffnet und geschlossen werden kann. Der Ventilschlüssel weist eine Sensiereinrichtung auf, die mit einer Informationsspeicherungseinrichtung kooperiert, um eine Verdrehung des Ventils zu detektieren und diese Daten zu speichern. An der Oberseite des Ventilschlüssels befindet sich ein LED-Display, welches Information des betreffenden Ventils anzeigt. Gespeicherte Daten können mittels einer Funkstation eines Fahrzeugs an eine Ventil-Aufzeichnungsstation übermittelt werden.

EP 0 788 573 B1 offenbart eine Vorrichtung zum Protokollieren des Betriebs eines Ventils. Offenbart ist ein Ventil, welches mit einem Ventilschlüssel geöffnet und geschlossen werden kann. Eine Elektronikeinrichtung am Ventil übermittelt Daten betreffend einen Öffnungszustand des Ventils über eine Kopplungseinheit des Ventilschlüssels an eine operative Einheit des Ventilschlüssels, wobei mittels der operativen Einheit in einem internen Speicher Ventildaten, wie z.B. Ventilstatus, Ventildrehgeschwindigkeit gespeichert werden können.

DE 198 28 272 B4 offenbart eine Einbaugarnitur für Wasser- oder Gasversorgungsleitungen mit Transponder. Offenbart ist eine Anordnung mit einem Schreib-Lese-Gerät, welches Schieber- und/oder Ventildaten eines Rohrleitungsnetzes erfasst und an einen Zentralrechner übermittelt.

EP 3 224 515 B1 offenbart ein Verfahren zur Identifizierung eines Unterflurventils einer Ventilanordnung und eine Verwendung einer Ventilanordnung. Offenbart ist ein Untertageventil mit einer Fluidsteuerungseinheit und einer Erweiterungseinheit, auf die eine Identifizierungs-Leseeinrichtung aufgesetzt werden kann, um eine Identifizierung (z.B. Ventiltyp) und eine Betätigung des Untertageventils 2 vorzunehmen.

US 2018/0276594 A1 offenbart ein Verfahren zum Registrieren eines installierten Ventils. Gelehrt wird ein Übermitteln von Ventildaten an einen zentralen Server, wobei Daten (satellitenbasierte Ortungsdaten, Identifizierungsdaten) des Ventils in Form eines Ventildatensatzes in einer zentralen Datenbank gespeichert werden.

Es ist eine Aufgabe der Erfindung, eine verbesserte Vorrichtung zum Betätigen einer Armatur bereitzustellen.

Gemäß einem ersten Aspekt wird die Aufgabe gelöst mit einer Vorrichtung zum Betätigen einer Armatur, aufweisend:
- eine erste Schnittstelle;
- eine zweite Schnittstelle;
- eine Authentifizierungseinrichtung zum Authentifizieren der Armatur über die erste Schnittstelle;
- wenigstens ein Sensorelement zum Erfassen von Betätigungsdaten der Vorrichtung; und
- eine Kommunikationseinrichtung zum Übermitteln der Betätigungsdaten über die zweite Schnittstelle.

Auf diese Weise wird erfindungsgemäß ein Werkzeug bzw. eine Vorrichtung zum Betätigen einer Armatur geschaffen, welches Daten betreffend ein Betätigen der Armatur aufzeichnen und übermitteln kann. Vorteilhaft kann dadurch eine digitale Stellungsanzeige der Armatur auf einer Online-Plattform realisiert werden, wodurch Fehlbedienungen und Schädigungen der Armatur weitgehend unterbunden werden können. Auf diese Weise werden zeitnahe Rückmeldungen des Betätigens der Armatur gegeben, sodass ein zeitnahes Ergreifen von entsprechenden Maßnahmen (z.B. bei Fehlbetätigung der Armatur) realisiert werden kann.

Gemäß einem zweiten Aspekt wird die Aufgabe gelöst mit einer Kommunikationseinrichtung, aufweisend eine vierte Schnittstelle zum Austausch von Daten mit einer Vorrichtung zum Betätigen einer Armatur und eine fünfte Schnittstelle zum Austausch von Daten mit einer ersten Datenbank, ferner aufweisend eine Speichereinrichtung zum Speichern von Parametern und/oder Betätigungsdaten einer Armatur.

Gemäß einem dritten Aspekt wird die Aufgabe gelöst mit einer Datenbank, aufweisend eine sechste Schnittstelle, wobei die Datenbank eingerichtet ist, Parameter einer Armatur an eine Kommunikationseinrichtung zu übertragen und/oder Betätigungsdaten der Armatur von der Kommunikationseinrichtung zu empfangen, wobei die Datenbank eingerichtet ist, die Parameter und/oder die Betätigungsdaten zu speichern.

Vorteilhafte Weiterbildungen der Vorrichtung, der Kommunikationseinrichtung sind Gegenstand von jeweils abhängigen Ansprüchen.

Eine vorteilhafte Weiterbildung der Vorrichtung zeichnet sich dadurch aus, dass die Vorrichtung ferner eine Signalisierungseinrichtung aufweist, mit der die erfassten Betätigungsdaten signalisiert werden. Auf diese Weise wird eine nützliche Möglichkeit zum Erkennen einer korrekten/inkorrekten Betätigung der Armatur bereitgestellt, wodurch z.B. eine korrekte und/oder eine Fehlbetätigung der Armatur signalisiert werden können. Dadurch können z.B. rasche Maßnahmen ergriffen werden, um das unkorrekte Betätigen der Armatur zu beenden.

Eine weitere vorteilhafte Weiterbildung der Vorrichtung zeichnet sich dadurch aus, dass sie ferner ein Speicherelement zum Speichern von Parametern und/oder der Betätigungsdaten der Vorrichtung aufweist. Auf diese Weise können die genannten Parameter gespeichert werden, wodurch z.B. eine Historie der Betätigung und/oder eine Betätigungsvorschrift für die Armatur reproduzierbar sind.

Eine weitere vorteilhafte Weiterbildung der Vorrichtung ist dadurch gekennzeichnet, dass sie ferner eine Ortungseinrichtung aufweist. Dadurch können zusätzlich genaue Ortungsdaten übermittelt werden, die eine rasche Lokalisierung der betroffenen bzw. betätigten Armatur erlauben.

Eine weitere vorteilhafte Weiterbildung der Vorrichtung zeichnet sich dadurch aus, dass die Kommunikationseinrichtung zum funkbasierten Austausch von Daten ausgebildet ist. Auf diese Weise kann z.B. eine Online-Datenverbindung zwischen der Armatur und einer externen Datenbank realisiert werden, wodurch eine gute Überwachbarkeit der Armatur unterstützt ist.

Eine weitere vorteilhafte Weiterbildung der Vorrichtung sieht vor, dass sie weiterhin eine Motoreinrichtung zum motorisierten Betreiben der Vorrichtung umfasst. Auf diese Weise kann ein motorisiertes Betreiben der Vorrichtung durchgeführt werden, was vorteilhaft eine erleichterte Betätigung der Armatur bzw. Bedienung der Vorrichtung ermöglicht.

Eine vorteilhafte Weiterbildung der Kommunikationseinrichtung zeichnet sich dadurch aus, dass wenigstens einer der folgenden Parameter in der Speichereinrichtung hinterlegbar und zwischen einer ersten Datenbank und einer Vorrichtung zum Betätigen einer Armatur übertragbar ist: Drehmoment, Drehwinkel, ID, Zeitstempel, Geo-Position. Dadurch werden nützliche Betätigungsdaten beim Protokollieren des Betätigens der Armatur verwendet.

Eine weitere vorteilhafte Weiterbildung der Kommunikationseinrichtung zeichnet sich dadurch aus, dass die Kommunikationseinrichtung eingerichtet ist, sich bei einer bestehenden Datenverbindung mit der ersten Datenbank zu synchronisieren. Vorteilhaft ist es auf diese Weise nicht unbedingt erforderlich, eine permanente Datenverbindung zwischen der Kommunikationseinrichtung und der Datenbank zur Verfügung zu haben. Dadurch sind mittels der Vorrichtung sowohl ein Offline- als auch ein Onlinebetrieb des Aufzeichnens der Betätigungsdaten der Armatur ermöglicht.

Die Erfindung wird im Folgenden mit weiteren Merkmalen und Vorteilen anhand von mehreren Figuren im Detail beschrieben. Gleiche bzw. funktionsgleiche Elemente haben gleiche Bezugszeichen. Die Figuren sind insbesondere zur prinzipiellen Erläuterung der Erfindung vorgesehen und sind nicht unbedingt maßstabsgetreu ausgeführt. Zum Zwecke einer besseren Übersichtlichkeit kann vorgesehen sein, dass nicht in sämtlichen Figuren für sämtliche Elemente stets sämtliche Bezugszeichen eingezeichnet sind.

Offenbarte Vorrichtungsmerkmale ergeben sich analog aus entsprechenden Verfahrensmerkmalen und umgekehrt. Dies bedeutet, dass sich Merkmale, technische Vorteile und Ausführungen betreffend die Vorrichtung zum Betätigen einer Armatur in analoger Weise aus entsprechenden Merkmalen, technischen Vorteilen und Ausführungen betreffend das Verfahren zum Betätigen einer Armatur ergeben und umgekehrt. Die nachfolgend verwendete Formulierung "bzw." umfasst insbesondere auch die Formulierung "und/oder".

In den Figuren zeigt:
- Fig. 1: ein prinzipielles Systemdiagramm zur Erläuterung einer Funktionsweise des vorgeschlagenen Verfahrens;
- Fig. 2: eine Übersichtsdarstellung zum Erläutern eines Datenflusses zwischen einzelnen Komponenten des vorgeschlagenen Systems;
- Fig. 3: ein prinzipielles Blockschaltbild einer Ausführungsform des vorgeschlagenen Systems; und
- Fig. 4: einen prinzipiellen Ablauf einer Ausführungsform eines vorgeschlagenen Verfahrens zum Betätigen einer Armatur.

### Beschreibung von Ausführungsformen

Ein Kerngedanke der Erfindung besteht insbesondere darin, ein Verfahren bereitzustellen, bei dem ein Anwender zeitnah über einen Zustand und/oder eine betriebliche Stellung einer Armatur informiert wird, wodurch z.B. eine missbräuchliche und/oder fehlerhafte Bedienung der Armatur weitgehend ausgeschlossen sein können. Bei der zu überwachenden Armatur kann es sich beispielsweise um einen Schieber, eine Klappe, ein Betätigungselement eines Hydranten oder ein sonstiges Verstellelement einer Versorgungs-Infrastruktur, usw. handeln. Bei der Versorgungs-Infrastruktur kann es sich beispielsweise um ein Wasserwerk, ein Fernwärmenetz, ein Erdgasnetz, ein Abwassernetz mit Druckentwässerung und dergleichen handeln, welche zur Verteilung eines entsprechenden Fluids (z.B. Wasser, Abwasser, Erdgas, Erdöl, usw.) vorgesehen ist.

Im Ergebnis ist es mit der vorgeschlagenen Vorrichtung in einem Zusammenwirken mit einer Kommunikationseinrichtung und einer Datenbank vorteilhaft möglich, ein berechtigtes und ordnungsgemäßes Betätigen der Armatur zu erfassen und an eine übergeordnete Einheit (z.B. eine Datenbank eines kommunalen Wasserwerks) zu signalisieren. Nach Erkennen eines unberechtigten und/oder nicht ordnungsgemäßen Betätigens der Armatur können in weiterer Folge geeignete Maßnahmen getroffen werden, z.B. ein Veranlassen einer persönlichen Überprüfung der Armatur, Wartungs-, Reparatur-, Austauscharbeiten, usw.

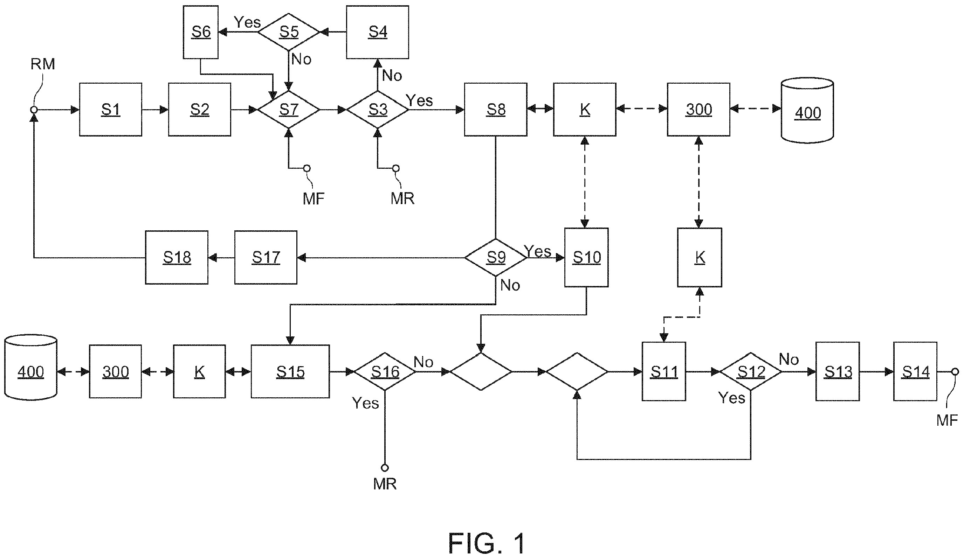

Fig. 1 zeigt ein Übersichtsbild eines vorgeschlagenen Systems. Ein Zustand RM repräsentiert einen Ruhemodus, in welchem sich eine vorgeschlagene Vorrichtung bzw. ein Werkzeug 100 (nicht dargestellt) zum Betätigen einer Armatur (nicht dargestellt) in einem Ruhemodus befindet, z.B. auf einer Basisstation (nicht dargestellt) aufgesetzt, auf der ein elektrischer Energiespeicher der Vorrichtung 100 kabellos aufgeladen werden kann. In einem Schritt S1 wird die Vorrichtung 100 von der Basisstation abgenommen. Durch das Abnehmen von der Basisstation wird in einem Schritt S2 ein Hochfahren der Vorrichtung 100 initiiert, was z.B. einen Aufbau einer Nahbereichs-Kommunikationsverbindung (z.B. Bluetooth) zwischen der Vorrichtung 100 und einer Kommunikationseinrichtung 300, ein Initialisieren bzw. Aktivschalten von elektronischen Komponenten (z.B. Drehmomentsensor, Drehwinkelsensor, usw.) der Vorrichtung 100 umfasst.

In einem Schritt S3 wird geprüft, ob die Nahbereichs-Kommunikationsverbindung zum Zwecke einer späteren Datenübertragung zu der externen Kommunikationseinrichtung 300 (z.B. Smartphone, Laptop, Tablet, usw.) zur Verfügung steht. Falls die Nahbereichs-Kommunikationsverbindung noch nicht bereit ist, wird in einem Schritt S4 ein Feedback (z.B. visuell mit einem Blinksignal, und/oder akustisch, und/oder haptisch) über eine optional an der Vorrichtung 100 angeordnete Signalisierungseinrichtung (nicht dargestellt) ausgegeben.

In einem Schritt S5 wird geprüft, ob die Vorrichtung 100 auf eine Armatur 200 (nicht dargestellt) aufgesetzt ist. Wenn dies der Fall ist, kann in einem Schritt S6 über die genannte Signalisierungseinrichtung ein weiteres (z.B. akustisches und/oder haptisches) Feedback ausgegeben werden. Wenn dies nicht der Fall ist, wird auf Schritt S7 und nachfolgend auf Schritt S8 verzweigt, wobei die Nahbereichs-Kommunikationsverbindung zwischenzeitlich verfügbar ist, was in Schritt S3 geprüft wurde.

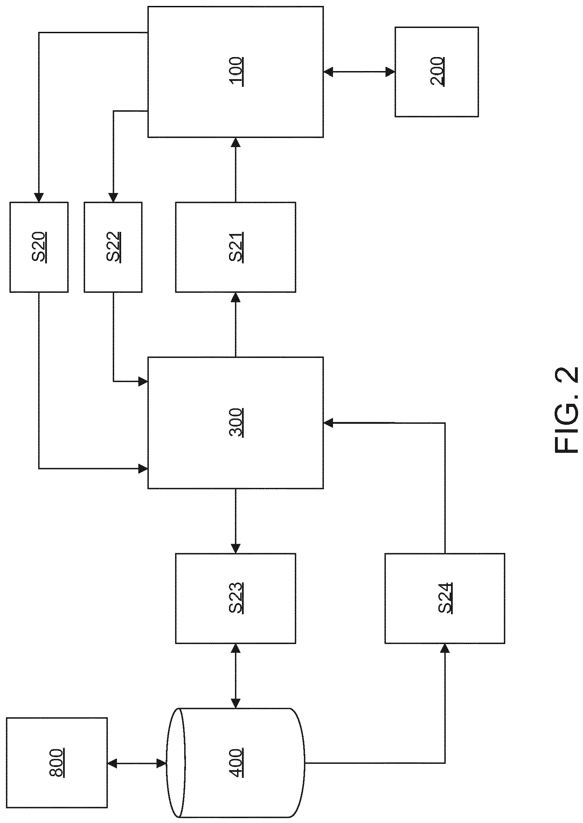

Im Schritt S8 wird die Vorrichtung 100 auf die mit einem Identifizierungs- bzw. Authentifizierungselement (z.B. NFC-Tag) versehene Armatur 200 (nicht dargestellt) aufgesetzt. Danach findet ein Kommunikationsprozess K mit einem Datenaustausch zwischen der Vorrichtung 100, der Kommunikationseinrichtung 300 und einer ersten Datenbank 400 statt, die nachstehend mit Bezugnahme auf Fig. 2 näher erläutert wird.

In einem Schritt S9 wird geprüft (z.B. mittels eines NFC-Readers der Vorrichtung 100), ob das Authentifizierungselement (z.B. NFC-Chip) der Armatur 200 die erwartete ID aufweist, wodurch überprüft werden kann, ob die Vorrichtung 100 auf "die richtige" Armatur 200 aufgesetzt ist.

Falls dies zutrifft, wird in einem Schritt S10 ein akustisches und/oder ein visuelles Feedback (z.B. grüne LED) über die Signalisierungseinrichtung ausgegeben, mit dem angezeigt wird, dass sich die Vorrichtung 100 auf der "richtigen" Armatur 200 befindet. Zudem wird diese Tatsache mittels des Kommunikationsprozesses K auch an die Kommunikationseinrichtung 300 und in weiterer Folge an die erste Datenbank 400 signalisiert.

In weiterer Folge wird auf Schritt S11 verzweigt, in welchem eine Aufzeichnung von Betätigungsdaten der Armatur 200 durchgeführt wird, wobei während der Betätigung der Armatur 200 mittels der Vorrichtung 100 z.B. Drehmoment, Drehrichtung, Drehwinkel und daraus eine Stellung der Armatur 200, Winkelgeschwindigkeit, Geo-Position (z.B. GPS), Impulse bzw. Spitzenwerte von Drehmoment bzw. -winkel, Schließgeschwindigkeit, Öffnungsgeschwindigkeit der Armatur 200 usw. sensorisch erfasst und aufgezeichnet werden.

Zur sensorischen Erfassung der genannten Betätigungsdaten kann in der Vorrichtung 100 wenigstens ein geeigneter Sensor verbaut sein.

Alternativ oder zusätzlich kann auch wenigstens ein Sensor in der Armatur 200 verbaut sein, wobei erfasste Daten dann per Nahbereichskommunikation an die Vorrichtung 100 übermittelt werden. Ein Aufzeichnen der Betätigungsdaten findet in Schritt S11 auch im Falle einer auf eine falsche Armatur 200 aufgesetzten Vorrichtung 100 statt, sodass vorteilhafter Weise auch Fehlbetätigungen bzw. nicht autorisierte Betätigungen der Armatur 200 im Rahmen des Kommunikationsprozesses K mitprotokolliert und daraus geeignete Schritte abgeleitet werden können.

Nach dem Aufzeichnen der Betätigungsdaten wird in einem Schritt S12 geprüft, ob das Aufzeichnen der Betätigungsdaten noch weiter fortgesetzt werden soll, wobei geprüft wird, ob das Authentifizierungselement der Armatur 200 noch das richtige Authentifizierungselement ist und die Vorrichtung 100 somit noch auf der richtigen Armatur 200 sitzt.

Falls dies zutrifft, wird in Schritt S11 die Aufzeichnung der Betätigungsdaten weiterhin durchgeführt. Falls dies nicht zutrifft, werden in einem Schritt S13 alle Module inklusive der optionalen Signalisierungseinrichtung der Vorrichtung 100 resettiert, wobei in einem Schritt S14 eine Abschlussmeldung generiert wird, wodurch von der Vorrichtung 100 an die Kommunikationseinrichtung 300 die Beendigung der Datenaufzeichnungen signalisiert wird. In einem Zustand MF ist die Aufzeichnung der Daten im Zusammenhang mit dem Betätigen der Armatur 200 abgeschlossen.

Falls im oben genannten Schritt S9 festgestellt wird, dass die Vorrichtung 100 auf der falschen Armatur 200 sitzt, es sich bei der Armatur 200 also um die "falsche" Armatur 200 handelt, was durch ein Auslesen des entsprechenden Authentifizierungselements durch die Vorrichtung 100 festgestellt wird, wird dieser Umstand in einem Schritt S15 mittels der Signalisierungseinrichtung der Vorrichtung 100 optisch und/oder akustisch und/oder haptisch signalisiert, z.B. durch ein Blinken einer roten LED der Signalisierungseinrichtung bei gleichzeitigem Abgeben eines akustischen Signaltons und/oder einer Vibration. Nachfolgend findet ein Kommunikationsprozess K mit der Kommunikationseinrichtung 300 und der ersten Datenbank 400 statt, der nachfolgend mit Bezugnahme auf Fig. 2 noch näher erläutert wird.

In einem Schritt S16 wird geprüft, ob die Vorrichtung 100 von der Armatur 200 entfernt wurde. Falls dies zutrifft, ist die Vorrichtung 100 in einem Zustand MR bereit für eine Aufzeichnung von Betätigungsdaten einer anderen Armatur 200.

Nach der Prüfung in Schritt S9 können in einem Schritt S17 ein Einsetzen der Vorrichtung 100 in die Basisstation und in einem nachfolgenden Schritt S18 ein Herunterfahren der Vorrichtung 100 durchgeführt werden, wobei die Module der Vorrichtung 100 samt Nahbereichs-Kommunikationsverbindung samt optionaler Signalisierungseinrichtung heruntergefahren werden. Danach geht die Vorrichtung 100 aus Energiespargründen wieder in den Ruhemodus des Zustands RM über.

Fig. 2 zeigt den Kommunikationsprozess bzw. Informationsfluss K zwischen der vorgeschlagenen Vorrichtung 100, der vorgeschlagenen Kommunikationseinrichtung 300 und der vorgeschlagenen ersten Datenbank 400.

Man erkennt, dass zunächst in einem Schritt S20 via Nahbereichs-Kommunikation (z.B. Near Field Communication, NFC) von der Vorrichtung 100 ID-Daten eines Authentifizierungselements 120 der Armatur 200 an die Kommunikationseinrichtung 300 übertragen werden, wobei z.B. ein Auslesen des Authentifizierungselements 120 durch eine Authentifizierungseinrichtung 30 der Vorrichtung 100 durchgeführt werden kann. Danach prüft die Kommunikationseinrichtung 300 in einem Schritt S21, ob es sich beim ausgelesenen Authentifizierungselement 120 um "das richtige" Authentifizierungselement handelt oder nicht.

Falls es sich um das richtige Authentifizierungselement 120 handelt, werden im Schritt S21 von der Kommunikationseinrichtung 300 spezifische Betätigungsparameter an die Vorrichtung 100 übertragen, wie z.B. maximal zulässiges Drehmoment, maximal zulässige Winkelgeschwindigkeit, Drehrichtung, Drehzahl, usw.

In einem Schritt S22 werden während des mittels der Vorrichtung 100 durchgeführten Betätigens der Armatur 200 aufgezeichnete bzw. zwischengespeicherte Betätigungsdaten, wie z.B. Drehwinkel, Drehmoment, Zeitstempel, Geo-Position, Anzahl von Umdrehungen, usw. von der Vorrichtung 100 und/oder der Armatur 200 sensorisch erfasst und vorzugsweise zyklisch an die Kommunikationseinrichtung 300 übertragen. Die genannten Betätigungsdaten können während des Betätigens der Armatur 200 von geeigneten Sensoren (nicht dargestellt) innerhalb der Vorrichtung 100 erfasst und per Nahbereichskommunikation von der Armatur 200 an die Vorrichtung 100 übermittelt werden. Alternativ oder zusätzlich können die genannten Sensoren auch innerhalb der Armatur 200 angeordnet sein, wobei erfasste Betätigungsdaten an die Kommunikationseinrichtung 300 übermittelt werden.

In einem Schritt S23 wird von der Kommunikationseinrichtung 300 eine Abschlussmeldung an die erste Datenbank 400 übertragen. Die Abschlussmeldung kann zum Beispiel während des Betätigens der Armatur 200 erfasste Zeitstempel enthalten, die eine oder mehrere Uhrzeiten des Betätigens der Armatur 200 durch die Vorrichtung 100 repräsentieren. Ferner kann die Abschlussmeldung auch eine Information enthalten, ob das Authentifizierungselement 120 der Armatur 200 in Ordnung bzw. das richtige ist oder nicht, und/oder einen über die Betätigung der Armatur 200 erfassten Drehmoment-, Drehzahlverlauf, Anzahl von Umdrehungen, Stellung der Armatur 200, usw.

In einem Schritt S24 können von der ersten Datenbank 400 an die Kommunikationseinrichtung 300 Daten betreffend Authentifizierungselemente 120 von Armaturen 200 übermittelt werden, wobei pro Authentifizierungselement 120 je nach Typ der Armatur 200 jeweils Daten betreffend ein Betätigen der Armatur 200, z.B. Zielstellung, max. Drehmoment, Drehwinkel, Anzahl von Umdrehungen, usw. übertragen werden können.

Erkennbar ist, dass mittels eines Computers 800, der auf die erste Datenbank 400 zugreifen kann, Einträge der ersten Datenbank 400 online eingesehen werden können. Auf diese Weise ergibt sich eine nützliche Online-Überwachung des Betätigens der Armatur 200 mittels der Vorrichtung 100. Dadurch können sehr zeitnahe Rückmeldungen des Betätigens der Armatur 200 realisiert werden, wobei durch die oben genannten Signalisierungsvorgänge Fehlbetätigungen der Armatur 200 weitestgehend ausgeschlossen werden können.

Im Ergebnis ist auf diese Weise mit einer Mensch-Maschine-Schnittstelle eine Online-Überwachung bzw. Protokollierung eines Betätigens der Armatur 200 mittels der Vorrichtung 100 ermöglicht, sodass quasi in Echtzeit mittels eines Zugriffs auf die erste Datenbank 400 Informationen abgerufen werden können, in welchem Betätigungszustand sich die Armatur 200 gerade befindet. Dies wird mit einem bidirektionalen Datenfluss von der Vorrichtung 100 zur Armatur 200, zur Kommunikationseinrichtung 300 und zur ersten Datenbank 400, und umgekehrt, realisiert. Auf diese Weise kann vorteilhaft ein schnelles Feedback über eine "richtige" bzw. "falsche" Bedienung der Armatur 200 bereitgestellt werden.

Dadurch lassen sich beispielsweise folgende spezifische Fragen rasch beantworten: Welche Armatur 200 wurde betätigt? Wurde "die richtige" Armatur 200 betätigt? Wurde die Armatur 200 in der richtigen Art und Weise betätigt? Wurde die Armatur 200 in die richtige/falsche Richtung betätigt bzw. verdreht? Wurde die Armatur 200 zu schnell/zu langsam/mit korrektem/falschem Drehmoment betätigt bzw. verdreht? Wie oft wurde die Armatur 200 verdreht? Wann wurde die Armatur 200 betätigt? Welches Drehmoment wurde zum Betätigen der Armatur 200 aufgewendet? Mit welchem Drehwinkel wurde die Armatur 200 betätigt? In welcher Stellung befindet sich die Armatur 200 nach der letztmaligen Betätigung?

Vorteilhaft kann eine Zwischenspeicherung der aufgezeichneten Daten auf der Kommunikationseinrichtung 300 stattfinden, wobei diese Daten an die erste Datenbank 400 vorzugsweise nur dann übertragen werden, wenn zwischen der Kommunikationseinrichtung 300 und der ersten Datenbank 400 eine Datenverbindung zur Verfügung steht, z.B. per Mobilfunk und/oder per Festnetz. Für die Vorrichtung 100 wird auf diese Weise eine "indirekte" Anbindung per Kommunikationseinrichtung 300 an die erste Datenbank 400 zur Verfügung gestellt. Vorteilhaft ist auf diese Weise zur Betätigungszeit der Armatur 200 keine Datenverbindung zwischen der Kommunikationseinrichtung 300 und der ersten Datenbank 400 erforderlich.

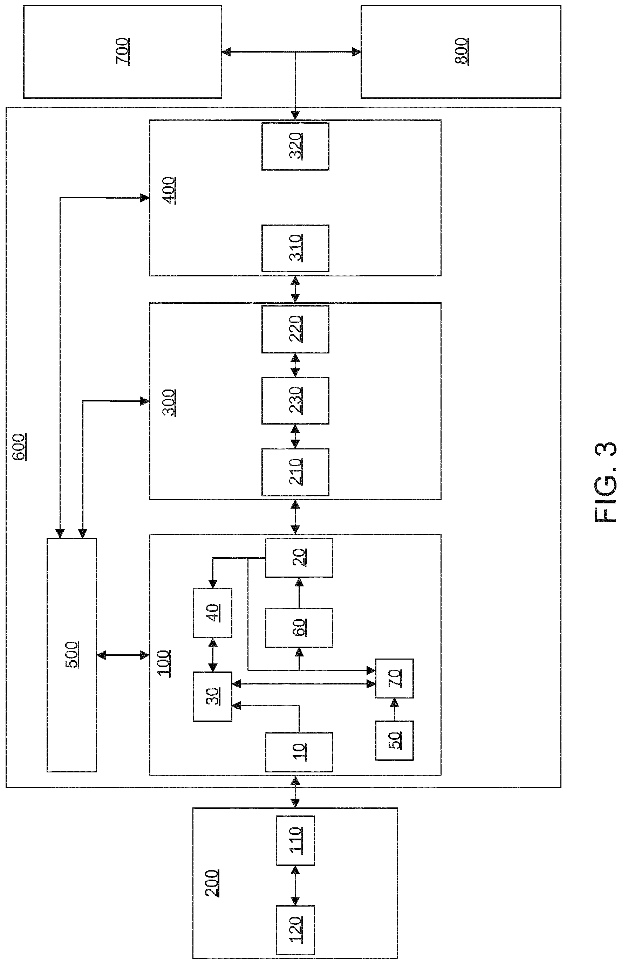

Fig. 3 zeigt ein vereinfachtes Blockschaltbild eines vorgeschlagenen Systems 600. Man erkennt die Vorrichtung 100, die in der oben erläuterten Art und Weise mit der Armatur 200 funktional zusammenwirkt. Zu diesem Zweck verfügt die Vorrichtung 100 über eine erste Schnittstelle 10, über die ein Datenaustausch mit der Armatur 200 über eine Schnittstelle 110 der Armatur 200 möglich ist. Ferner verfügt die Vorrichtung 100 eine zweite Schnittstelle 20, über die eine Kommunikation mit einer externen Kommunikationseinrichtung 300 (z.B. Smartphone, Tablet, Computer, usw.) möglich ist. Die Vorrichtung 100 kann zum Beispiel mittels eines Adapters (nicht dargestellt) auf unterschiedliche Armaturen 200 aufgesetzt werden, wobei ein Adapter und einem Bedienelement der Vorrichtung 100 geometrisch definiert zusammenpassen.

Man erkennt innerhalb der Vorrichtung 100 eine Authentifizierungseinrichtung 30, z.B. in Form eines NFC-Readers, mit dem das Authentifizierungselement 120 der Armatur 200 über die Schnittstelle 110 der Armatur 200 in die Vorrichtung 100 eingelesen werden kann.

Ferner erkennt man innerhalb der Vorrichtung 100 ein optionales Speicherelement 40, in welchem Parameter und/oder Betätigungsdaten betreffend die Armatur 200 gespeichert werden können. Im Falle des Nichtvorhandenseins des Speicherelements 40 ist lediglich ein Ermitteln bzw. Erfassen und ein nachfolgendes Übermitteln von Betätigungsdaten der Armatur 200 an die Kommunikationseinrichtung 300 vorgesehen. Man erkennt innerhalb der Vorrichtung 100 ferner wenigstens ein Sensorelement 50, z.B. in Form eines Drehwinkelsensors, Drehmomentsensors, Ortungseinrichtung, usw. zur Erfassung der oben genannten Betätigungsdaten der Armatur 200.

Mit Hilfe des Drehwinkelsensors lässt sich z.B. eine Anzahl von Umdrehungen der Armatur 200 ermitteln. Ferner erkennt man innerhalb der Vorrichtung 100 eine Kommunikationseinrichtung 60, mit der die genannten Betätigungsdaten bzw. die Parameter über die zweite Schnittstelle 20 an eine vierte Schnittstelle 210 bzw. von der vierten Schnittstelle 210 der Kommunikationseinrichtung 300 übermittelbar sind. Schließlich kann die Vorrichtung 100 eine optionale Signalisierungseinrichtung 70 aufweisen, mittels derer eine Signalisierung von Betätigungsdaten in der oben genannten Art und Weise durchgeführt werden kann.

Die genannte Signalisierung kann alternativ auch von der Kommunikationseinrichtung 300 selbst übernommen werden (z.B. mittels Signalton, Vibrationsalarm, Lichtsignal, optische Anzeige, usw.), so dass die Signalisierungseinrichtung 70 nicht unbedingt als eine eigenständige Einrichtung der Vorrichtung 100 ausgebildet sein muss.

Ein funktionales Zusammenwirken der Kommunikationseinrichtung 300 mit der Vorrichtung 100 erfolgt über die vierte Schnittstelle 210 der Kommunikationseinrichtung 300. Eine funktionelle Anbindung der Kommunikationseinrichtung 300 an die erste Datenbank 400 erfolgt über eine fünfte Schnittstelle 220 der Kommunikationseinrichtung 300. Dabei kann eine Zwischenspeicherung von Daten bzw. Parametern in einer Speichereinrichtung 230 der Kommunikationseinrichtung 300 erfolgen, die damit einen Zwischenspeicher für Daten/Parameter der ersten Datenbank 400 repräsentiert.

Erkennbar ist eine siebte Schnittstelle 320 der ersten Datenbank 400, an die eine zweite Datenbank 700 (z.B. eine Kundendatenbank mit Daten/Parameter von Armaturen 200) angeschlossen sein kann, wobei über die siebte Schnittstelle 320 Betätigungsdaten und/oder Parameter zwischen der Armatur 200 und der zweiten Datenbank 700 übermittelbar sind. Mit dem Computer 800 kann neben dem Zugriff auf die erste Datenbank 400 auch ein Zugriff auf die zweite Datenbank 700 realisiert werden.

Die Kommunikationseinrichtung 300 kann in einer nicht in Figuren dargestellten Alternative auch innerhalb der Vorrichtung 100 integriert sein, z.B. in Form eines Mobilfunkmodems samt SIM-Karte, wodurch ein funkbasierter Datenaustausch mit der ersten Datenbank 400 durchgeführt werden kann. Dadurch erübrigt sich bei dieser Variante vorteilhaft eine Verwendung einer externen Kommunikationseinrichtung, auch eine Nahbereichs-Kommunikationsverbindung (z.B. Bluetooth) ist in diesem Fall für die Vorrichtung 100 nicht erforderlich.

Durch den Zugriff des Computers 800 auf die erste Datenbank 400 und/oder auf die zweite Datenbank 700 kann eine visuelle Oberfläche zum Visualisieren von Betätigungsvorgängen bzw. -daten der Armatur 200 realisiert werden. Im Ergebnis ergibt sich dadurch ein System 600 zur Online- Überwachung eines Betätigens der Armatur 200 mittels einer Vorrichtung 100 zum Betätigen der Armatur 200.

Optional kann innerhalb der Vorrichtung 100 auch eine Ortungseinrichtung (nicht dargestellt), z.B. ein GPS-Sensorelement oder dergleichen vorgesehen sein. Optional kann die Ortungsfunktionalität für die Armatur 200 auch von der Kommunikationseinrichtung 300 bereitgestellt werden.

Vorteilhaft kann die Vorrichtung 100 sowohl manuell betätigt sein als auch durch eine elektrische Motoreinrichtung 500 (Elektromotor) angetrieben sein. Im letzteren Fall kann die Steuerung der Vorrichtung 100 mit der oben erläuterten Aufzeichnung der Betätigungsdaten kombiniert werden. Eine physische Verbindung zwischen der Motoreinrichtung 500 und der Vorrichtung 100 kann z.B. über eine Schlüsselnuss realisiert sein.

Vorzugsweise kann die Motoreinrichtung 500 mit der Vorrichtung 100 kommunizieren, so dass die Betätigungsdaten von der Vorrichtung 100 auch an die Motoreinrichtung 500 übermittelt werden können. Durch die Anbindung der Motoreinrichtung 500 an entweder die Kommunikationseinrichtung 300 und/oder an die erste Datenbank 400 können Parameter von der ersten Datenbank 400 an die Motoreinrichtung 500 übermittelt werden, so dass die Vorrichtung 100 mit den vorgesehenen Parametern betrieben werden kann. Denkbar ist in einer alternativen Ausführungsform auch eine Anordnung der Kommunikationseinrichtung 300 innerhalb der Motoreinrichtung 500 (nicht dargestellt).

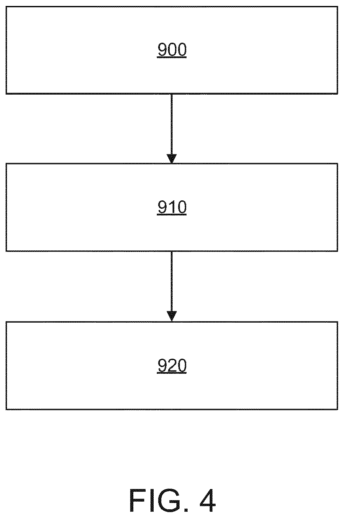

Fig. 4 zeigt ein prinzipielles Ablaufdiagramm eines Verfahrens zum Betätigen einer Armatur 200.

In einem Schritt 900 erfolgt ein Authentifizieren der Armatur 200 gegenüber der Vorrichtung 100.

In einem Schritt 910 wird ein Erfassen von Betätigungsdaten während eines Betätigens der Armatur 200 durchgeführt.

In einem Schritt 920 wird ein Übermitteln der Betätigungsdaten durchgeführt.

Mit dem vorgeschlagenen Verfahren lassen sich vorteilhaft unter anderem folgende Anwendungsszenarien realisieren:
Es kann zum Beispiel eine effiziente, zeitgemäße und lückenlose Dokumentation von Arbeitsschritten betreffend eine Betätigung von Armaturen samt automatischer Rückmeldung über den "Gesundheitszustand" der Armaturen 200 realisiert werden. Armaturen 200 sind üblicherweise in regelmäßigen zeitlichen Intervallen (z.B. alle fünf Jahre) zu betätigen und hinsichtlich ihrer betrieblichen Stellung zu kontrollieren. Mit der vorgeschlagenen Erfassung aller Betätigungen samt Drehmomente reduziert sich der dafür erforderliche Prüfaufwand in vorteilhafter Weise. Es müssen daher nur noch solche Armaturen betätigt werden, welche über einen definierten zurückliegenden Zeitraum nicht mehr betätigt wurden.

Ferner kann mit dem vorgeschlagenen Verfahren eine Leckortung mit einer Begrenzung eines Wasserverlusts auf ein definiertes Gebiet erreicht werden, indem Bereiche "ausgesperrt" und damit ein Gesamtwasserverbrauch betrachtet wird. Mit den historischen Zeitdaten der geschlossenen Armaturen 200 und den jeweiligen Verbrauchsdaten lässt sich über einen Machine-Learning-Ansatz ein Muster erkennen und damit eine Wahrscheinlichkeit für ein Leckgebiet ermitteln.

Ferner liefern die erfassten Zustandsdaten samt Drehmoment einem Betreiber Statistiken und Auswertungen zwecks Planung der Erneuerung von Armaturen 200.

Pro Strang und Hausanschluss kann mittels des vorgeschlagenen Verfahrens eine Versorgungsunterbrechung automatisch dokumentiert werden. Daraus lassen sich Statistiken und Key Performance Indikatoren (KPI) ableiten. Diese dienen einem Betreiber als Nachweis der Unterbrechung pro Anschluss/Objekt und helfen ihm, eine Versorgungsqualität der mit der Armatur zu versorgenden Infrastruktur (z.B. Hausanschluss, usw.) zu optimieren. Dies lässt sich z.B. als eine zeitliche Dauer einer Nichtversorgung der Infrastruktur mit Wasser, Gas, usw. ausdrücken, die durch eine Störung der Armatur verursacht sein kann.

Große Armaturen 200 dürfen in der Regel nicht zu schnell geschlossen werden. Damit keine Druckschläge ausgelöst werden, wird die Einhaltung der maximalen Schließgeschwindigkeit mit dem vorgeschlagenen Verfahren überwacht, wodurch eine elektrische Überwachung der Armaturen 200 samt akustischer und optischer Warnhinweise realisiert werden kann.

Zusammenfassend werden mit der Erfindung eine Vorrichtung und ein Verfahren zum Betätigen einer Armatur vorgeschlagen, die ein Feedback des Betätigens der Armatur 200 durch die Vorrichtung 100 realisieren.

Mit Hilfe eines an die Datenbank 400 angebundenen Computers 800 kann auf diese Weise eine komfortable digitale Stellungsanzeige für die Armatur 200 bereitgestellt werden. Im Ergebnis sind dadurch korrekte Betätigungen der Armatur 200 und deren Langlebigkeit aufgrund von Nicht-Beschädigung unterstützt.

Vorteilhaft lässt sich das vorgeschlagene Verfahren als eine Software realisieren, die auf der Vorrichtung 100, der Kommunikationseinrichtung 300 sowie der ersten Datenbank 400 ausführbar ist. Optional kann das Verfahren auch noch zusätzlich auf der Armatur 200 und auf dem Computer 800 durchgeführt werden. Eine einfache Adaptierbarkeit des vorgeschlagenen Verfahrens ist auf diese Weise vorteilhaft unterstützt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: 1. Schnittstelle
- 20: 2. Schnittstelle
- 30: Authentifizierungseinrichtung
- 40: Speicherelement
- 50: Sensorelement
- 60: Kommunikationseinrichtung
- 70: Signalisierungseinrichtung
- 100: Vorrichtung
- 110: 3. Schnittstelle
- 120: Authentifizierungselement
- 200: Armatur
- 210: 4. Schnittstelle
- 220: 5. Schnittstelle
- 300: Kommunikationseinrichtung
- 310: 6. Schnittstelle
- 320: 7. Schnittstelle
- 230: Speicherelement
- 400: erste Datenbank
- 500: Motoreinrichtung
- 600: System
- 700: zweite Datenbank
- 800: Computer
- 900...920: Verfahrensschritte
- RM: Ruhemodus
- MF: Messung abgeschlossen
- MR: Bereit für Messung
- S1...S18: Verfahrensschritte
- S20...S24: Verfahrensschritte
- K: Kommunikationsprozess

## Patentansprüche

1. Vorrichtung (100) zum Betätigen einer Armatur (200), aufweisend:
- eine erste Schnittstelle (10);
- eine zweite Schnittstelle (20);
- eine Authentifizierungseinrichtung (30) zum Authentifizieren der Armatur (200) über die erste Schnittstelle (10) ;
- wenigstens ein Sensorelement (50) zum Erfassen von Betätigungsdaten der Vorrichtung (100); und
- eine Kommunikationseinrichtung (60) zum Übermitteln der Betätigungsdaten über die zweite Schnittstelle (20).

2. Vorrichtung (100) nach Anspruch 1, **dadurch gekennzeichnet, dass** die Vorrichtung (100) ferner eine Signalisierungseinrichtung (70) aufweist, mit der die erfassten Betätigungsdaten signalisiert werden.

3. Vorrichtung (100) nach Anspruch 1 oder 2, ferner aufweisend ein Speicherelement (40) zum Speichern von Parametern und/oder der Betätigungsdaten der Vorrichtung (100).

4. Vorrichtung (100) nach einem der vorhergehenden Ansprüche, ferner aufweisend eine Ortungseinrichtung.

5. Vorrichtung (100) nach einem der vorhergehenden Ansprüche, wobei die Kommunikationseinrichtung (60) zum funkbasierten Austausch von Daten ausgebildet ist.

6. Vorrichtung (100) nach einem der vorhergehenden Ansprüche, weiterhin umfassend eine Motoreinrichtung (500) zum motorisierten Betreiben der Vorrichtung (100).

7. Vorrichtung (100) nach Anspruch 6, wobei die Motoreinrichtung (500) eingerichtet ist, einen Datenaustausch mit der Vorrichtung (100) und/oder mit einer externen Kommunikationseinrichtung (300) und/oder mit einer externen ersten Datenbank (400) durchzuführen.

8. Kommunikationseinrichtung (300), aufweisend eine vierte Schnittstelle (210) zum Austausch von Daten mit einer Vorrichtung (100) zum Betätigen einer Armatur (200) und eine fünfte Schnittstelle (220) zum Austausch von Daten mit einer ersten Datenbank (400), ferner aufweisend eine Speichereinrichtung (230) zum Speichern von Parametern und/oder Betätigungsdaten einer Armatur (200).

9. Kommunikationseinrichtung (300) nach Anspruch 8, wobei wenigstens einer der folgenden Parameter in der Speichereinrichtung (230) hinterlegbar und zwischen einer ersten Datenbank (400) und einer Vorrichtung (100) zum Betätigen einer Armatur (200) übertragbar ist: Drehmoment, Drehwinkel, ID, Zeitstempel, Geo-Position.

10. Kommunikationseinrichtung (300) nach Anspruch 8 oder 9, wobei die Kommunikationseinrichtung (300) eingerichtet ist, sich bei einer bestehenden Datenverbindung mit der ersten Datenbank (400) zu synchronisieren.

11. Datenbank (400) aufweisend eine sechste Schnittstelle (310), wobei die Datenbank (400) eingerichtet ist, Parameter einer Armatur (200) an eine Kommunikationseinrichtung (300) zu übertragen und/oder Betätigungsdaten der Armatur (200) von der Kommunikationseinrichtung (300) zu empfangen, wobei die Datenbank (400) eingerichtet ist, die Parameter und/oder die Betätigungsdaten zu speichern.

12. System (600) aufweisend eine Vorrichtung (100) zum Betätigen eine Armatur (200) nach einem der Ansprüche 1 bis 7, eine mit der Vorrichtung (100) funktional verbundene Kommunikationseinrichtung (300) nach einem der Ansprüche 8 bis 10 und eine funktional mit der Kommunikationseinrichtung (300) verbundene Datenbank (400) nach Anspruch 11.

13. Verfahren zum Betätigen einer Armatur (200) mittels einer Vorrichtung (100), aufweisend die Schritte:
- Authentifizieren der Armatur (200) gegenüber der Vorrichtung (100);
- Erfassen von Betätigungsdaten während eines Betätigens der Armatur (200); und
- Übermitteln der Betätigungsdaten.

14. Verfahren nach Anspruch 13, wobei ein Bereitstellen der Betätigungsparameter aus einer ersten Datenbank (400) und ein Speichern der Betätigungsdaten in der ersten Datenbank (400) durchgeführt wird.

15. Computerprogramm umfassend Befehle, die bei der Ausführung des Computerprogramms durch einen Computer diesen veranlassen, ein Verfahren gemäß Anspruch 13 oder 14 auszuführen, wobei das Computerprogramm als ein Computerprogrammprodukt auf einem maschinenlesbaren Speichermedium speicherbar ist.
